# FASCICULE DE BREVET EUROPEEN

(11) **EP 2 681 075 B1**
(45) Date de publication et mention de la délivrance du brevet: **11.07.2018**
(21) Numéro de dépôt: 12716611.4
(22) Date de dépôt: 23.02.2012
(51) Int. Cl.: B60P 1/64

(54) **DISPOSITIF DE COMMANDE D'ACCESSOIRES POUR PORTE-CONTENEUR**
VORRICHTUNG ZUR STEUERUNG VON ZUBEHÖRTEILEN FÜR EINEN CONTAINER-HALTER
DEVICE FOR CONTROLLING ACCESSORIES FOR A CONTAINER-HOLDER

(30) Priorité: 03.03.2011 CH 366112011
(43) Date de publication de la demande: 08.01.2014
(73) Titulaire: V.C.S. Vente Construction Service Sàrl En Bandeau, 1113 St-Saphorin-Morges (CH)
(72) Inventeur: CHAUVET, Frank, CH-1113 St-Saphorin-Morges (CH)
(74) Mandataire: Grosfillier, Philippe
(86) Numéro de dépôt international: PCT/IB2012/050824
(87) Numéro de publication internationale: WO 2012/127331

(56) Documents cités:
- EP-A1- 1 950 087
- EP-A1- 2 199 149
- US-A- 5 100 279

## Description

### Domaine de l'invention

La présente invention concerne le domaine des conteneurs, en particulier des conteneurs ou des bennes transportés par des moyens mobiles comme des camions, comme divulgué par US 5,100,279. Plus précisément, la présente invention concerne les dispositifs de commande d'accessoires qui sont utilisés avec de tels conteneurs et le porte conteneur correspondant, dont une partie est fixée au porte-conteneurs et l'autre au conteneur, la partie fixée au porte-conteneur actionnant celle fixée au conteneur.

L'invention porte notamment sur des moyens permettant l'ouverture de la porte du conteneur ou l'actionnement d'autres éléments qui ne sont pas liés directement au conteneur.

### Etat de la technique :

Les systèmes de commande d'accessoires pour porte-conteneur connus sont les suivants :
- Par système pneumatique ou hydraulique ou par liaison mécanique (came) Les systèmes hydrauliques ou pneumatiques ont les contraintes suivantes :
- Une ou plusieurs connexions lient le conteneur au porte-conteneur ou à la superstructure du châssis porteur et, par conséquent, requiert une opération de branchement lors du changement de conteneur;
- Une maintenance régulière est requise au niveau connectique notamment pour les conditions suivantes :
   gel, salissures, boues, etc

Les variantes mécaniques, soit par tringle ou par came, présentent les contraintes suivantes :
- La dépendance du moment de commande est réglée par une position déterminée du conteneur par rapport au porte-conteneur ou au châssis du porte-conteneur et, par conséquent, difficilement modulable.

La demande de brevet FR 2 299 986 décrit un véhicule de transport et un conteneur qui est muni d'un éjecteur. Plus précisément, le matériel de transport selon l'invention de FR 2 299 986 comprend, d'une part un conteneur muni d'un poussoir éjecteur interne et d'une porte arrière verrouillable et relevable, d'autre part un véhicule sur le plateau porteur duquel on peut poser le conteneur ou un autre conteneur analogue interchangeable, et il est caractérisé en ce que tous les organes hydrauliques pour commander la porte du couteneur et son éjecteur sont montés à demeure sur le véhicule dont ils restent solidaires, tandis que le conteneur possède pour la commande de sa porte et de son éjecteur, des pièces mécaniques dont la liaison avec la commande hydraulique du véhicule s'effectue automatiquement, par le seul fait de poser le conteneur sur le plateau porteur.

La demande EP 2 199 149 décrit quant à elle un équipement amovible de transport d'une charge comme une benne. De nombreuses publications de l'état de la technique sont citées dans cette publication et leurs défauts discutés. L'idée dans cette publication est par conséquent de proposer un équipement amovible de transport d'une charge, comme une benne, équipé d'un dispositif d'actionnement d'un organe fonctionnel qui soit simple d'utilisation et de montage, peu coûteux, manipulable à distance (en particulier de la cabine de pilotage du véhicule), automatique, et qui ne nécessite pas de liaison directe entre l'équipement amovible et le véhicule de sorte que le retrait de la benne hors du véhicule peut se faire aisément, sans précaution supplémentaire et sans risque de dégrader le dispositif d'actionnement. A cet effet, la benne amovible est conçue pour être montée de façon amovible sur un véhicule et être verrouillé sur ledit véhicule au moyen d'au moins un verrou d'immobilisation, la benne étant apte à se déplacer linéairement selon une direction longitudinale sur ledit véhicule entre une position dite de transport et au moins une autre position dite d'arrêt et comprenant au moins un dispositif d'actionnement d'un organe fonctionnel monté sur la benne. Le dispositif d'actionnement comprend au moins un moyen de commande fixé sur une zone prédéterminée de la benne afin que ledit moyen de commande soit disposé en vis-à-vis du verrou dans la position d'arrêt de la benne pour que le verrou puisse pousser le moyen de commande lorsqu'il immobilise la benne dans cette position d'arrêt; et des moyens de raccordement dudit moyen de commande audit organe fonctionnel conçus pour convertir la poussée du verrou sur le moyen de commande en une commande d'actionnement dudit organe fonctionnel. Ainsi, le dispositif d'actionnement de l'équipement comprend un moyen de commande qui sera rapporté dans une zone judicieusement choisie pour agir avec le verrou existant sur le véhicule, afin que ce soit le verrou qui amorce l'actionnement de l'organe fonctionnel. En utilisation, il suffit donc au conducteur de déverrouiller la benne, en ouvrant les verrous, de déplacer la benne jusqu'à placer l'organe de commande en face du verrou adéquat, et enfin de verrouiller la benne en fermant les verrous, dont l'un viendra pousser le moyen de commande ce qui aura pour effet d'actionner l'organe fonctionnel via les moyens de raccordement. Avec un tel dispositif, il n'existe aucun lien mécanique ou hydraulique ou autre entre la benne et le véhicule, hormis les verrous qui sont toujours présents avec une benne supportée par un véhicule. Ainsi, il est inutile d'intervenir sur le véhicule, sachant qu'une telle intervention nécessite un transport et une immobilisation longue et coûteuse du véhicule. Typiquement comme exemple de réalisation, ce dispositif permet l'ouverture automatique de la porte arrière (organe fonctionnel) de la benne transportée.

Un désavantage de cette invention est d'une part l'utilisation de verrous existant comme actionneurs ce qui présuppose qu'ils sont aptes à ce fonctionnement et capables d'exécuter cette fonction. D'autre part, cela implique une double fonction des verrous existants.

### Principe de l'invention

Le but de l'invention est de simplifier les systèmes connus.

Plus particulièrement, l'un des buts de l'invention est de proposer un système simple et fiable permettant l'actionnement de moyens liés à un conteneur ou une benne transporté par exemple par un camion.

L'invention du présent système comprend au moins un moteur actionnant au moins une commande à distance, se trouvant sensiblement à proximité d'au moins un crochet reliant le conteneur au porte-conteneur.

L'invention possède les avantages suivants due au fait que, lors du chargement ou déchargement de conteneurs, la distance de rattachement entre le conteneur et le porte-conteneur ne varie sensiblement pas.
- La possibilité de commander plusieurs fonctions indépendamment les unes des autres, soit par cascade(s) ou séquence(s) ou toute autre combinaison, par exemple plusieurs moteurs de commande;
- Le système est peu sensible aux agressions telles que conditions neigeuses, boueuses ou tout autre corps étranger;
- La possibilité d'actionnement d'un connecteur rapide qui s'entend sans manipulation n'est pas exclue (hydraulique, pneumatique ou électrique);
- La possibilité d'intégrer un ou plusieurs moteurs de déclenchement au bras du porte-conteneur n'est pas exclue;
- La possibilité d'actionnement d'élément(s) pompe(s) n'est pas exclue; par exemple transmission de force par fluide;
- La possibilité d'alimentation d'un ou plusieurs consommateurs (hydraulique, pneumatique ou électrique) n'est pas exclue.

Le principe de l'invention permet notamment de commander un ou plusieurs accessoires dans toutes les positions du développement du bras chargeur comme on le comprendra de la description qui suit.

Dans un mode d'exécution l'invention concerne un dispositif de commande pour porte-conteneur permettant l'actionnement d'au moins un élément du conteneur depuis le porte-conteneur, ledit dispositif comprenant au moins des premiers moyens d'actionnement liés à un bras chargeur du porte-conteneur et des deuxièmes moyens d'actionnement liés au conteneur, lesdits moyens d'actionnement n'étant pas liés entre eux, lesdits premiers moyens d'actionnement agissant sur lesdits deuxièmes moyens d'actionnement de façon à mettre en oeuvre les deuxièmes moyens d'actionnement.

Dans un mode d'exécution les premiers moyens d'actionnement comprennent au moins un moteur linéaire et un levier pouvant tourner par rapport au bras chargeur du porte-conteneur.

Dans un mode d'exécution les deuxièmes moyens d'actionnement comprennent au moins un levier pouvant tourner par rapport au conteneur, un moyen de transmission lié au levier et mis en action par celui-ci.

Dans un mode d'exécution le moyen de transmission agit sur des moyens de verrouillage qui libèrent la porte du conteneur et permettent son ouverture ou sur d'autres moyens ou accessoires réalisant d'autres fonctions.

Dans un mode d'exécution l'invention concerne un porte-conteneur comprenant des premiers moyens d'actionnement tels que définis ci-dessus.

Dans un mode d'exécution l'invention concerne un conteneur comprenant des deuxièmes moyens d'actionnement tels que définis ci-dessus.

Dans un mode d'exécution l'invention concerne un ensemble comprenant un porte-conteneur, un conteneur et un dispositif tels que définis ci-dessus.

### Description détaillée de l'invention

L'invention sera mieux comprise par la description des figures qui illustrent des modes d'exécution de l'invention dans lesquelles
La figure 1A illustre une vue de face d'un conteneur et des moyens selon l'invention dans une première position;
La figure 1B illustre une vue de côté du conteneur et de sa porte dans une première position;
La figure 2A illustre une vue de face d'un conteneur et des moyens selon l'invention dans une deuxième position;
La figure 2B illustre une vue de côté du conteneur et de sa porte dans une deuxième position;
La figure 3A illustre une vue de côté d'une variante dans une première position;
La figure 3B illustre une vue de côté d'une variante dans une deuxième position.

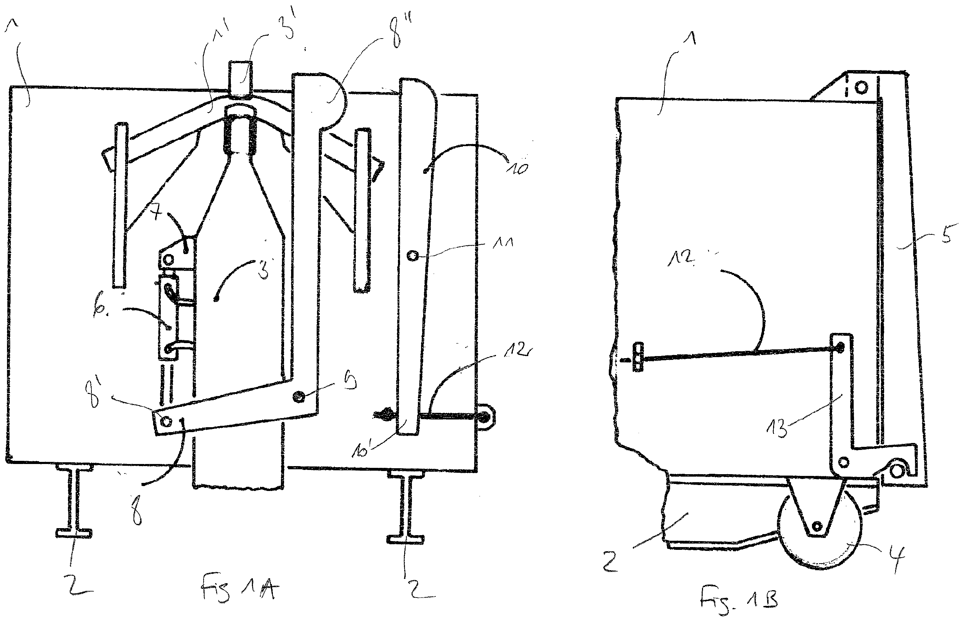

Dans la figure 1A, on a représenté un conteneur 1 selon la présente invention vu de face, par exemple depuis la cabine du porte-conteneur (par exemple un camion, non représenté en détail) avec un châssis sous forme de rails 2.

De façon classique le porte-conteneur comprend un bras chargeur 3 qui est utilisé pour saisir le conteneur par un crochet 3' du bras 3 coopérant avec un anneau 1' (par exemple sous forme de barre) du conteneur depuis le porte-conteneur et l'amener sur le porte-conteneur (en le tirant, procédure de chargement) ou pour déposer le conteneur depuis le porte-conteneur (en le poussant, procédure de déchargement). Pour effectuer ces procédures de chargement/déchargement, le conteneur 1 peut comprendre des roues ou galets 4 qui permettent au conteneur 1 de rouler sur le sol lors de ces procédures de chargement/déchargement.

Selon l'invention, on ajoute sur le bras chargeur 3, des moyens d'actionnement permettant d'ouvrir, ou au moins de libérer, la porte 5 du conteneur 1 comme décrit en détail ci-dessous.

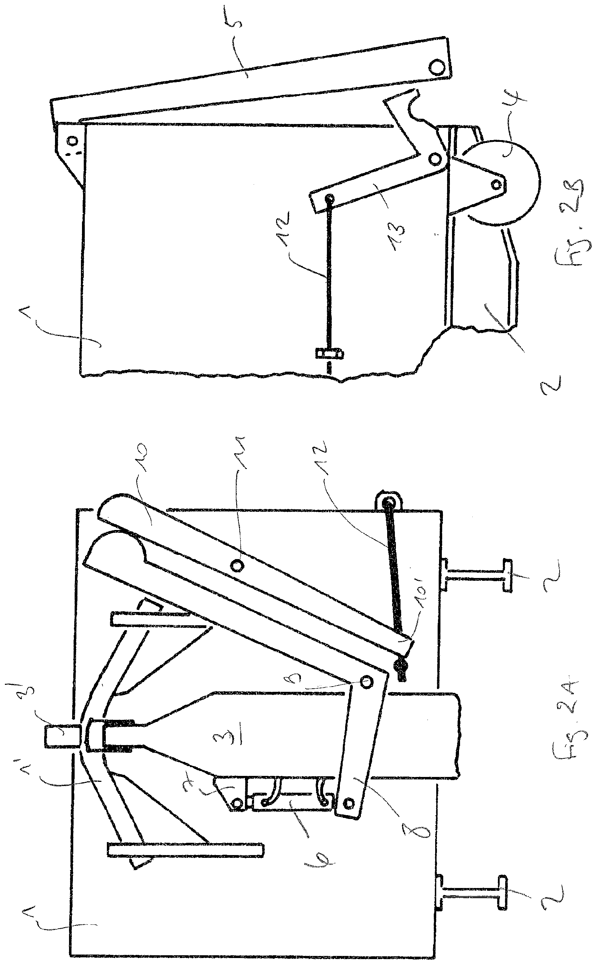

Les moyens d'actionnement comprennent au moins un moteur linéaire 6, par exemple un vérin, dont l'une des extrémités est liée au porte-conteneur 1, par exemple au travers d'une attache soudée 7, et l'autre extrémité est liée à un levier de commande 8 monté sur un axe 9 permettant sa rotation, par exemple dans un plan substantiellement perpendiculaire à l'axe longitudinal du conteneur. La rotation du levier de commande 8 sur l'axe 9 est mise en oeuvre par l'actionnement du vérin 6 comme on le comprend en comparant dans les figures 1A et 2A la position du levier 8. Dans la figure 1A, il est en position approximativement verticale et dans la figure 2A, il est basculé vers la droite d'environ 30°.

L'extrémité 8" du levier qui est éloignée du point d'application 8' du vérin 6 est destinée à coopérer avec des moyens de libération de la porte 5 du conteneur. Ces moyens de libération comprennent au moins un deuxième levier 10 qui est monté sur un axe 11 lié au conteneur 1 et permettant sa rotation, ledit deuxième levier étant actionné en rotation par l'extrémité 8" du levier 8. Lors de cette rotation, l'extrémité éloignée 10' du deuxième levier 10 agit sur un moyen de transmission 12 (par exemple un câble ou une tringlerie) qui lui à son tour agit sur les moyens de verrouillage 13 de la porte, par exemple un système de loquet ou autre système équivalent de fermeture.

Ainsi, comme illustré dans les figures, l'actionnement du levier 8 effectué sur le bras chargeur du porte-conteneur se répercute sur le deuxième levier 10 qui lui est monté sur le conteneur 1, ledit deuxième levier 10 actionnant (par son extrémité 10') ensuite les moyens de fermeture de la porte 5. Comme on le voit dans les figures 2A et 2B, les moyens d'ouverture sont mis en oeuvre et la porte 5 du conteneur 1 est libérée et peut s'ouvrir (figure 2A), sans qu'une autre action ne soit nécessaire sur le conteneur.

Le principe de l'invention est donc simple, ne nécessite aucun branchement (mécanique, hydraulique, pneumatique etc) entre porte-conteneur et le conteneur et est facile à mettre en oeuvre de façon sûre. Typiquement, cela peut se faire directement depuis le porte conteneur par le chauffeur de celui-ci.

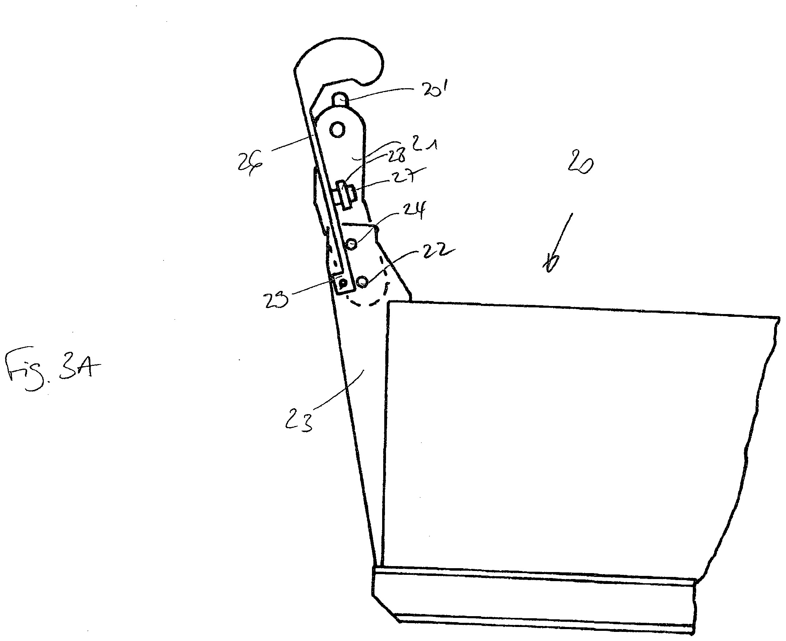

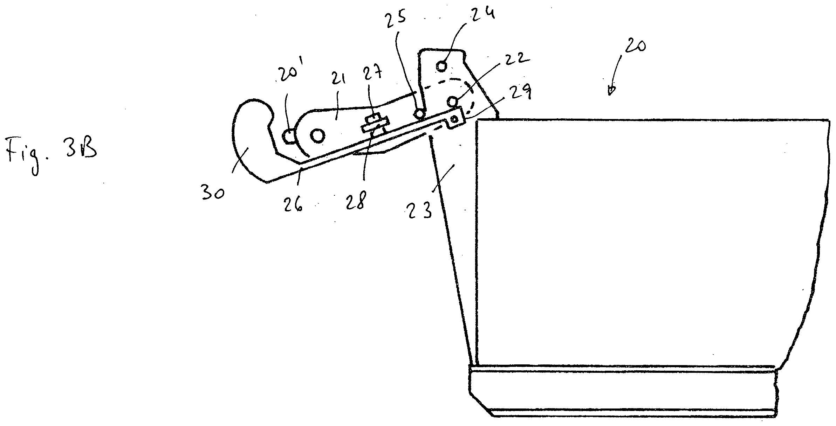

Les figures 3A et 3B illustrent une variante de conteneur dans lequel l'anneau 20' du conteneur 20 peut basculer. Typiquement de tels conteneurs sont facilement empilables les uns sur les autres en raison du basculement de l'anneau 20'.

De façon plus détaillée, ce conteneur 20 comprend donc un anneau 20' qui est monté sur des montants 21 qui sont reliés par des axes au conteneur 20, par exemple à des montants 23 correspondants attachés au conteneur (par exemple par soudage ou autre moyen équivalent).

Les montants 21 de l'anneau 20' sont de préférence bloqués en position haute (figure 3A) par un axe qui traverse les trous 24, 25 (24 dans les montants 23, 25 dans les montants 21).

Dans la position basculée (figure 3B) le mouvement de l'anneau 20' peut être arrêté, par exemple par une butée (ou un autre moyen équivalent) ou non. Il peut aussi être utile de prévoir des moyens réglables permettant à l'anneau de prendre plusieurs positions à partir de la position haute de la figure 3A.

Le conteneur dans ce mode d'exécution comprend également des moyens d'actionnement sous forme d'un levier 26 (correspondant au levier 10 des figures précédentes) qui se déplace avec le crochet 20'. Plus précisément, le levier 26 est monté sur l'un des montants 27 par l'intermédiaire d'un axe 27 de levier et un support correspondant 28 qui permet sa rotation par rapport au crochet selon le principe de la présente invention.

De préférence, l'extrémité 29 du levier 26 qui est liée au moyen de transmission 12 (figures 1A, 1B, 2A, 2B) est proche de l'axe 22 ou alignée sur cet axe afin de limiter les débattements.

On peut ainsi actionner les moyens de verrouillage (ou tout autre moyen commandé selon le principe de l'invention dans différentes positions du crochet 20'. On peut prévoir à l'extrémité du levier 26 une palette 30 ou un autre système équivalent facilitant cet actionnement dans toutes les positions.

Bien entendu, les exemples donnés et les moyens indiqués le sont à titre illustratifs et ne doivent pas être considérés comme limitatifs.

Par exemple, on pourrait utiliser directement le vérin 6 pour actionner le deuxième levier 10 et par conséquent se passer du levier 8. Ou alors le moteur linéaire pourrait être un moteur rotatif avec un système de came ou équivalent pour actionner le levier placé sur le conteneur. L'actionnement peut être à simple ou double effet.

Le moyen de transmission 12 peut être un câble ou une tringlerie ou un autre moyen équivalent. Il peut être fixé ou passer sur l'extérieur du conteneur 1 ou non, voire sous le conteneur 1. Il peut aussi être noyé dans le conteneur ou dans un ou plusieurs éléments de celui-ci.

Le moteur linéaire 6 peut être relié de façon fixe au bras 3 (comme illustré dans les figures par l'attache 7, ou alors on peut prévoir d'autres moyens équivalents, par exemple un montage direct.

On pourrait également envisager de monter le levier 8 sur une platine orientable qui permettrait de maintenir un bon alignement entre les leviers 8 et 10 et ainsi compenser la position du conteneur par rapport au porte-conteneur. Le principe de la platine orientable peut aussi s'appliquer à la fixation du moteur 6 au bras 3.

Comme on le comprend, la présente invention n'est pas limitée à la commande de l'ouverture de la porte du conteneur mais peut s'appliquer de façon générale à tout accessoire monté sur le conteneur. Celui-ci peut alors être commandé, mis en oeuvre ou actionné directement depuis le porte-conteneur selon le principe de l'invention.

## Revendications

1. Dispositif de commande pour porte-conteneur permettant l'actionnement d'au moins un élément du conteneur (1) depuis le porte-conteneur, ledit dispositif comprenant des deuxièmes moyens d'actionnement (10,10',11,12,13) montés sur le conteneur **caractérisé en ce que** le dispositif comprend des premiers moyens d'actionnement (6,7,8,9) montés sur un bras chargeur (3) et lesdits premiers et deuxièmes moyens d'actionnement ne sont pas liés entre eux, lesdits premiers moyens agissant sur lesdits deuxièmes moyens d'actionnement de façon à mettre en oeuvre les deuxièmes moyens d'actionnement.

2. Dispositif selon la revendication 1, dans lequel lesdits premiers moyens d'actionnement comprennent au moins un moteur linéaire (6) et un levier (8) pouvant tourner par rapport au bras chargeur (3) du porte-conteneur.

3. Dispositif selon la revendication 1 ou 2, dans lequel les deuxièmes moyens d'actionnement comprennent au moins un levier (10) pouvant tourner par rapport au conteneur (1), un moyen de transmission (12) lié au levier (10) et mis en action par celui-ci.

4. Dispositif selon la revendication 3, dans lequel le moyen de transmission (12) agit sur des moyens de verrouillage (13) qui libèrent une porte (5) du conteneur et permettent son ouverture ou sur d'autres moyens ou accessoires réalisant d'autres fonctions.

5. Porte-conteneur comprenant un bras chargeur et des premiers moyens d'actionnement (6,7,8,9) tels que définis dans l'une des revendications 1 à 4 destinés à agir sur des deuxièmes moyens d'actionnement fixés sur un conteneur **caractérisé en ce que** les premiers moyens d'actionnement (6,7,8,9) sont montés sur le bras chargeur (3).

6. Ensemble comprenant un porte-conteneur, un conteneur et un dispositif selon l'une des revendications 1 à 4.

## Patentansprüche

1. Vorrichtung zur Steuerung für einen Container-Halter, die das Betätigen von mindestens einem Element des Container (1) von dem Container-Halter ermöglicht, wobei die Vorrichtung zweite Betätigungsmittel (10, 10', 11, 12, 13) aufweist, die auf dem Container befestigt sind, **dadurch gekennzeichnet, dass** die Vorrichtung erste Betätigungsmittel (6, 7, 8, 9) aufweist, die auf einem Ladearm (3) befestigt sind, und die ersten und zweiten Betätigungsmittel nicht miteinander verbunden sind, wobei die ersten Mittel auf die zweiten Betätigungsmittel derart einwirken, um die zweiten Betätigungsmittel einzusetzen.

2. Vorrichtung nach Anspruch 1, wobei die ersten Betätigungsmittel mindestens einen Linearmotor (6) und einen Hebel (8) aufweisen, der sich in Bezug auf den Ladearm (3) des Container-Halters drehen kann.

3. Vorrichtung nach Anspruch 1 oder 2, wobei die zweiten Betätigungsmittel mindestens einen Hebel (10), der sich in Bezug auf den Container (1) drehen kann, ein Übertragungsmittel (12) aufweisen, das mit dem Hebel (10) verbunden ist und durch diesen betätigt wird.

4. Vorrichtung nach Anspruch 3, wobei das Übertragungsmittel (12) auf Verriegelungsmittel (13), die eine Klappe (5) des Containers freigeben und sein Öffnen ermöglichen, oder auf andere Mittel oder Zubehörteile einwirkt, die andere Funktionen ausführen.

5. Container-Halter, umfassend einen Ladearm und erste Betätigungsmittel (6, 7, 8, 9), wie in einem der Ansprüche 1 bis 4 definiert, die dazu bestimmt sind, auf zweite Betätigungsmittel einzuwirken, die an dem Container befestigt sind, **dadurch gekennzeichnet, dass** die ersten Betätigungsmittel (6, 7, 8, 9) auf dem Ladearm (3) befestigt sind.

6. Anordnung, umfassend einen Container-Halter, einen Container und eine Vorrichtung nach einem der Ansprüche 1 bis 4.

## Claims

1. Control device for a container carrier allowing at least one element of the container (1) to be actuated from the container carrier, the said device comprising second actuating means (10, 10', 11, 12, 13) mounted on the container, **characterized in that** the device comprises first actuating means (6, 7, 8, 9) mounted on a loading arm (3) and the said first and second actuating means are not connected to one another, the said first means acting on the said second actuating means in such a way as to operate the second actuating means.

2. Device according to Claim 1, in which the said first actuating means comprise at least a linear motor (6) and a lever (8) able to rotate with respect to the loading arm (3) of the container carrier.

3. Device according to Claim 1 or 2, in which the second actuating means comprise at least a lever (10) able to rotate with respect to the container (1), a transmission means (12) connected to the lever (10) and actuated by the latter.

4. Device according to Claim 3, in which the transmission means (12) acts on locking means (13) which release a door (5) of the container and allow it to be opened or act on other means or accessories performing other functions.

5. Container carrier comprising a loading arm and first actuating means (6, 7, 8, 9) as defined in one of Claims 1 to 4 intended to act on second actuating means fixed to a container, **characterized in that** the first actuating means (6, 7, 8, 9) are mounted on the loading arm (3).

6. Assembly comprising a container carrier, a container and a device according to one of Claims 1 to 4.
